# EUROPEAN PATENT SPECIFICATION

(11) **EP 0 280 484 B1**
(45) Date of publication and mention of the grant of the patent: **08.09.1993**
(21) Application number: 88301466.4
(22) Date of filing: 22.02.1988
(51) Int. Cl.: A23P 1/08, A23P 1/12, A21C 11/16

(54) **Method and apparatus for the formation of a shaped food product**
Verfahren und Vorrichtung zur Herstellung eines geformten Nahrungsmittels
Procédé et installation de préparation d'un produit alimentaire façonné

(30) Priority: 25.02.1987 JP 43629/87
(43) Date of publication of application: 31.08.1988
(73) Proprietor: Kobayashi, Masao, Fukui-shi Fukui-ken (JP)
(72) Inventor: Kobayashi, Masao, Fukui-shi Fukui-ken (JP)
(74) Representative: Pearce, Anthony Richmond

(56) References cited:
- EP-A- 0 202 143
- US-A- 3 572 259
- US-A- 4 251 201
- US-A- 4 343 603
- US-A- 4 469 475

## Description

This invention relates to a method and apparatus for completely wrapping and sealing a solid state food material with a food material having a clay-like, dough-like or plastic consistency, and forming the resultant structure into globular shape. The food material having a clay-like, dough-like or plastic consistency will be referred to hereinafter simply as the wrapping material and may be a food material such as dough, soft and sticky rice cake, ground meat, minced meat, mashed potato. The solid state food material will be referred to hereinafter as the centre material and may be constituted by one or more piece of a food material such as maroons, strawberries, nuts, boiled eggs and meat cubes.

In the past, wrapped foods such as maroon buns (maroon inside, dough outside), strawberry-jelly (inside strawberry, outside jelly) and bakudan-oden (a Japanese food - boiled egg inside, ground meat outside), have been made by hand, which is time-consuming and can also be very insanitory. In view of this, the inventor pioneered a new mass production method and apparatus for such wrapped food, and US Patent No. 4,398,881 describes a technique involving the supply of wrapping material in tubular shape form using an extrusion die while the smaller guide tube is provided for the supply of the centre material. However, difficulties are sometimes encountered with certain types of wrapping material. Air, which may be introduced with the centre material, can prevent the wrapping material from adhering effectively to the centre material with the result that separation can occur in practice. This is undesirable and it is an object of the present invention to obviate or mitigate this problem.

US-A-4251201 discloses a method and an apparatus for making shaped food articles, including globular shapes, wherein extrudable coating material and extrudable filling material are passed along respective longer and shorter inner, extrusion conduits to an iris valve at the end of the outer extrusion conduit by respective intermittent supply means. When the iris valve is closed, the coating material supply means is operated to supply coated material across the end of the outer conduit. When the iris valve is opened, both the supply means are operated to cause co-extrusion of the coating material and the filling material, and then the filling material supply means is closed followed by closing of the iris valve to produce the shaped food article wherein the filling material is enclosed within the coating material.

US-A-4469475 discloses a similar method and apparatus wherein a sleeve with supporting fingers is provided at the end of the inner conduit and the arrangement is such that, as the iris valve begins to close, the back pressure thereby developed in the coating material automatically causes the inner conduit to be closed by overcoming the pressure of the filling material.

### Summary of the Invention

According to one aspect of the present invention, there is provided a method for forming globular food products in which a solid state food material is wrapped with a wrapping material which is a food material having a clay-like, dough-like or plastic consistency, said method comprising the steps of repeatedly:-
(a) providing a layer of the wrapping material in the region of a gate having an openable mouth;
(b) placing the solid state food material on the layer of wrapping material;
(c) ejecting the solid state food material having the wrapping material on its circumference through gate mouth; and
(d) severing the wrapping material so as to form the globular shape by closing of the mouth of the gate, characterised in that each step (b) comprises separating at least one piece of solid food material from a supply of said pieces and placing said at least one separated piece on the layer of wrapping material.

According to another aspect of the present invention, there is provided apparatus for forming globular food products in which a solid state food material is wrapped with a wrapping material which is a food material having a clay-like, dough-like or plastic consistency, said apparatus comprising:-
(a) a gate having a mouth which can be opened and closed;
(b) means connected with the gate so as to open and close the mouth;
(c) wrapping material supply means communicating with the gate and arranged to provide a layer of the wrapping material on the gate,
(d) solid state food material supply means arranged to supply the solid state food material to a location above the gate where the layer of wrapping material is provided so that, in use, the solid state food material is placed on the layer of wrapping material; and
(e) means for urging the solid state food material and wrapping material through the gate as the latter is opened by the means (b), whereby in use the wrapping material is wrapped around the solid state food material and the mouth of the gate is closed so as to form the food product to globular shape,
   characterised in that said solid state food material supply means includes means for separating at least one piece of solid food material from a supply of said pieces and for placing said at least one separated piece on the layer of wrapping material.

### Brief Description of The Drawings

FIG. 1 is a diagrammatic elevational view of an apparatus in its entirety, in accordance with invention, showing a first embodiment.

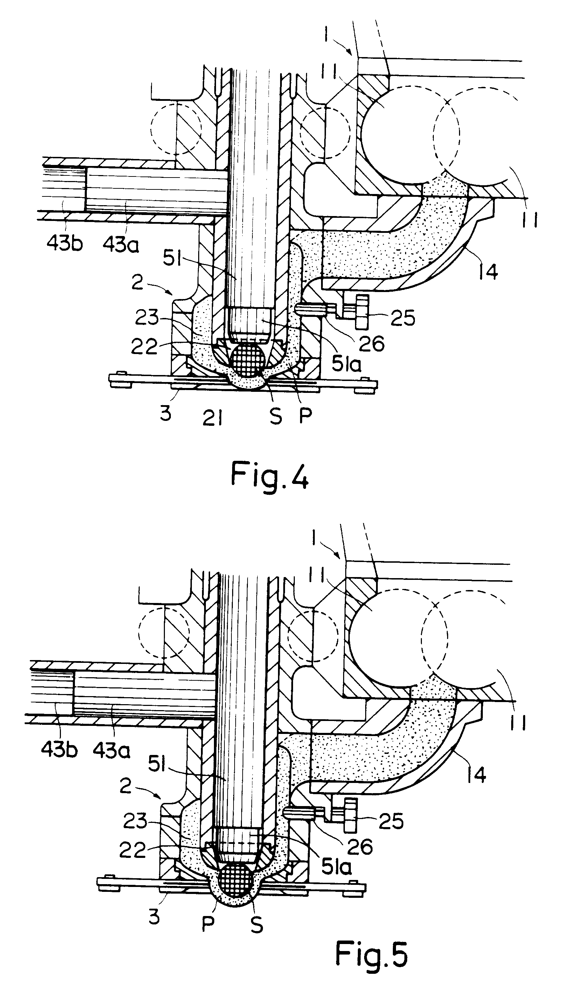

FIG. 2 to FIG. 8 are explanatory drawings of working procedures.

FIG. 9 is an explanatory drawing showing the final procedure in which two pieces of the centre material are wrapped and sealed by the wrapping material.

FIG. 10 is an explanatory drawing showing the final procedure in which the top of the globular shaped food is cut down like a cone-shaped hat.

FIG. 11 is an explanatory drawing showing the final procedure in which only the wrapping material is processed without any centre material.

FIG. 12 is an explanatory drawing showing the final procedure in which a cube of centre material shape is wrapped and sealed by the wrapping material.

FIG. 13 is a partially sectioned vertical view of an adjuster for controlling the flow of the wrapping material from an extruder into a cavity.

FIG. 14 is a partially sectioned horizontal view on the line A-A of FIG. 13.

FIG. 15 is an explanatory view of a gate part shown in an open condition.

FIG. 16 is an explanatory view of the gate part of FIG. 15 showing movement into a closed condition.

FIG. 17 is the partially flat view of the gate showing other mechanisms.

FIG. 18 is the partially sectional view of the gate showing the mechanism illustrated in FIG. 17.

FIG. 19 is an explanatory drawing showing an example of a modified method for pushing work means of the clay-like material.

FIG. 20 is a diagrammatic elevational view of an apparatus in its entirety, showing a second embodiment.

FIGS. 21a and 21b are sectional front and side views, respectively, of a gate part and shutter and operating lever parts.

FIG. 22 is a section on the line Aʹ-Aʹ of FIG. 21a.

FIG. 23 is a perspective view of the shutter and lever parts of FIG. 21a.

FIG. 24 is a front view showing the shutter part in an open condition.

FIG. 25 is a front view showing the shutter part in a closed condition.

FIG. 26 to FIG. 33 are the explanatory drawings of working procedures in accordance with the second

### Detailed Description of Preferred Embodiments

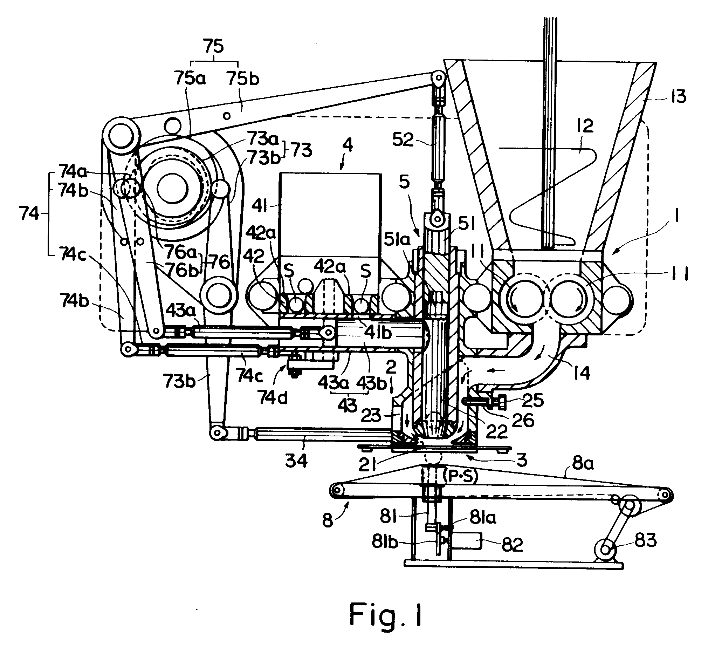

Referring now to FIG. 1, arrow (1) illustrates an extruder which has a built-in gear pump mechanism (11.11) and which is equipped with hopper (13) on the upper part and with flighted screw (12). The extruder is driven by a motor (not shown) eg an induction motor or the like, and serves to force food-like material having a clay-like, dough-like or plastic consistency (hereinafter simply called wrapping material) through a supply path (14).

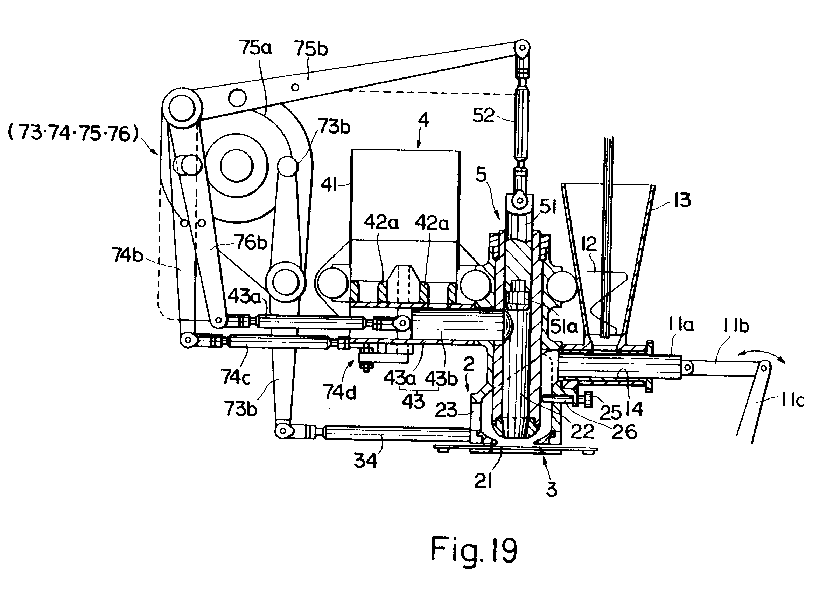

Alternatively, a piston mechanism (11a, 11b, 11c), eg as shown in FIG. 19, or a screw conveyor mechanism can be employed.

Arrow (2) indicates a periodically operable ejection and shaping mechanism outlet passage (21). As shown in Fig. 1 this mechanism includes a cylinder (22) into which solid state food material (hereinafter called centre material) is introduced. Such mechanism also has a cavity (23) connected to the supply path (14) wherein the wrapping material is forced. Outlet passage (21) is opened periodically by operation of a gate indicated by arrow (3).

An adjusting knob (25) controls the flow of the wrapping material. When the wrapping material is present in cavity (23), the knob (25) is operated to ensure supply of the wrapping material evenly throughout the cavity 23, the knob (25) controlling the position of a movable regulating plate (26) near the connection point between supply passage (14) and cavity (23).

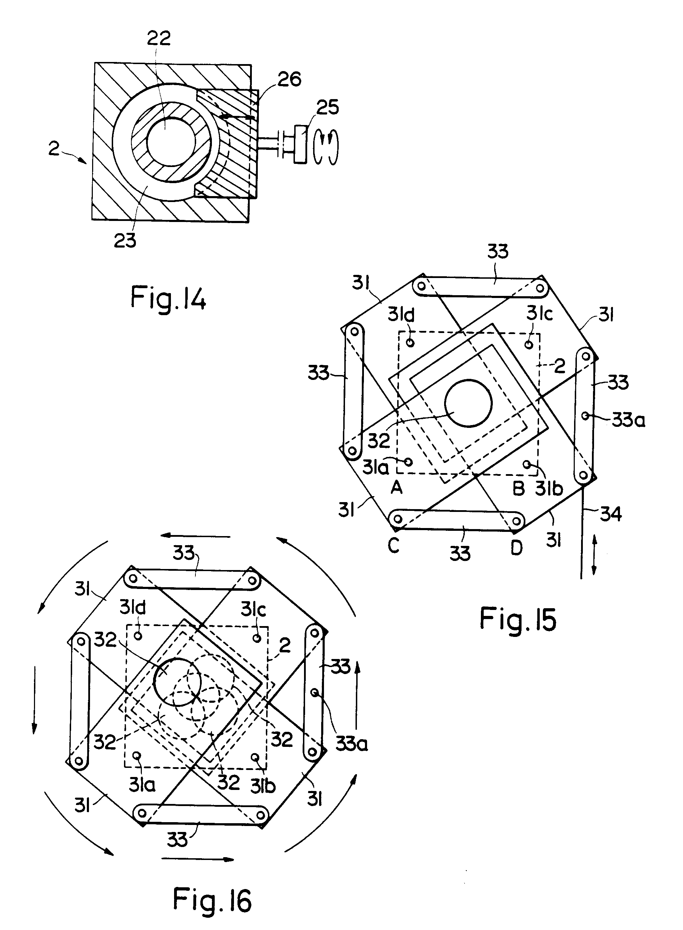

Gate (3) is illustrated in more detail in FIG. 15 and FIG. 16 where four overlapping plates 31 are each provided with a respective circular hole (32) therethrough. Each plate 31 is pivotally mounted on a fixed part of the mechanism 2 by a respective pivot pin (31a, 31b, 31c, 31d). Adjacent plates (21) are interconnected by respective links (33) so that all the plates can be pivoted simultaneously about their associated pivot pins (31a to 31d) upon movement of a driving bar (34) pivotally connected by link pin (33a) with one of the links 33.

Arrow (4) indicates a means for supplying the centre material. The supply means includes a hopper (41) having a rotary metering device (42) in its lower part. The metering device (42) includes a sectional frame (42a) rotatable on a fixed plate having a hole (41b) therethrough. Centre material S falls into the metering device (42) which moves it over the hole (41b) so that the centre material drops through the hole (41b) when permitted to do so by the piston (43b) of a transfer mechanism (43). The mechanism (43) is equipped with a cylinder (43a) along which the centre material is passed under the action of piston (43b). From the cylinder (43b), the centre material passes into the cylinder (22).

Arrow (5) indicates a mechanism for ejecting centre material from the cylinder (22). The mechanism includes a piston (51) which ejects the centre material from the cylinder (22) into the passage (21), and an operating rod (52). The lower end of the piston 51 is provided with a cover (51a) which is made of silicone rubber material (fluorinated) or fluorinated plastics material, preventing the food material from sticking. This cover (51a) is not always necessary, and it may be substituted by a fluorinated plastics coating on the piston itself. The extruder (1), gate (3), the mechanism (4) for supplying the centre material (4), and the ejection mechanism (5) operate in a periodic manner in synchronism under the control of corresponding control mechanism (73, 74, 75, 76). This corresponding mechanism is based on "Cam Tappet" system. Extruder (1) transfers the wrapping material is controlled through the following movement: Cam-tappet (73) consisting of cam (73a) and pivoted follower lever (73b) moves driving bar (34) of gate (3), and also operates an on/off control switch for the extruder motor which operates the gear pump mechanism (11.11) and flighted screw (12). The motor is switched on when the gate (3) is opened and switched off when the gate (3) is closed. The mechanism (4) for supplying the centre material is controlled through the following movement: Cam (74a) and pivoted follower lever (74b) and recessed bar (74c) effect periodic rotation of the metering device 42 via a ratchet mechanism (74d), so as to permit the centre material to drop into the cylinder 43(a) periodically at the correct time.

In the meantime, the centre material in path (43a) is pushed into cylinder (22) forcibly by the movement of piston (43b) which is effected by cam (76a) and pivoted follower lever (76b).

The ejection mechanism (5) is controlled as follows:-
When the centre material has been introduced into cylinder (22), it is forced out of the chamber (32) and surrounded by the wrapping material as a result of downward movement of the piston (51) under the action of cam 75(a) and pivoted follower lever (75b) connected to rod (52). At the same time, gate (3) across output passage (21) opens to permit the material to pass therethrough and then closes to cause the circumference of the centre food material to be completely wrapped and sealed with the wrapping material. Below the passage (21), there is a belt conveyor (8) where the completed food material in globular shape is placed and transported away. Arrow (81) indicates a lifting mechanism which operates to lift conveyor belt (8a) in synchronism with cam tappet (73) for the movement of gate (3). When gate (3) is opened, a signal is generated by the way of a relayed system, and the relative relayed signal is accepted at a connecting point (81a), whereas a brake-motor (82) is operated automatically for controlling cam (81b) which is operably connected to lifter rod (81). The belt conveyor (8) is operated in synchronism with this by motor (83).

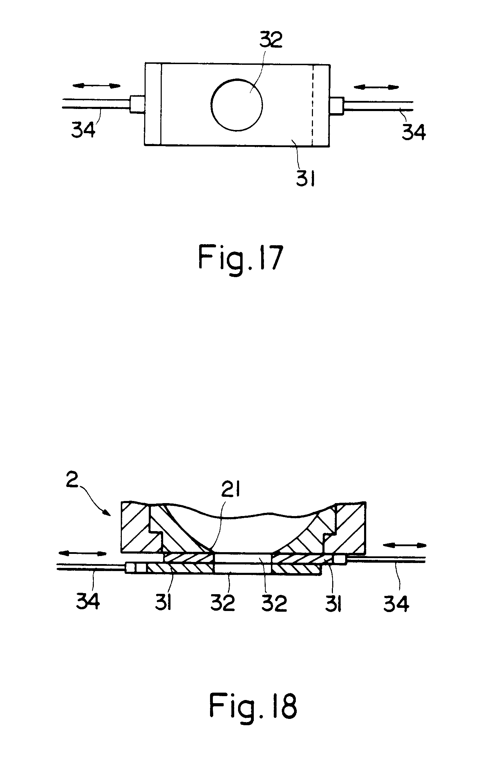

Various modifications of the above-described mechanism may be made. For instance, the extruder (1) may be replaced by another transfer/mechanism known per se from the moulding machine or vacuum moulding machine art. The mechanism (4) for supplying the centre material may be replaced by the so-called "Feeding Doll Mechanism", and ejection mechanism (5) may be replaced by an air cylinder mechanism. The mechanism (73.74.75) may be replaced by micro-computer controlled mechanism. With regard to the gate (3), this need not be of the form described above in relation to FIGS. 15 and 16, but may be of another form, eg. as shown in FIG. 17 and FIG. 18 where two superimposed gate plates (31) are provided on gate mouth (32) and are movable in different directions relative to each other in accordance with the arrow indications.

### Production Procedures

The following shows the production of a Japanese cake called "Momoyama".

The wrapping material which is a food material having a
- clay-like consistency P:: Kneaded flour with yolk and white bean jam.
- The centre food material S:: A plum soaked with candied sugar.

First, insert material P into hopper (13) of extruder (1), and insert pieces of material S into hopper (41) while the gate (3) is closed.

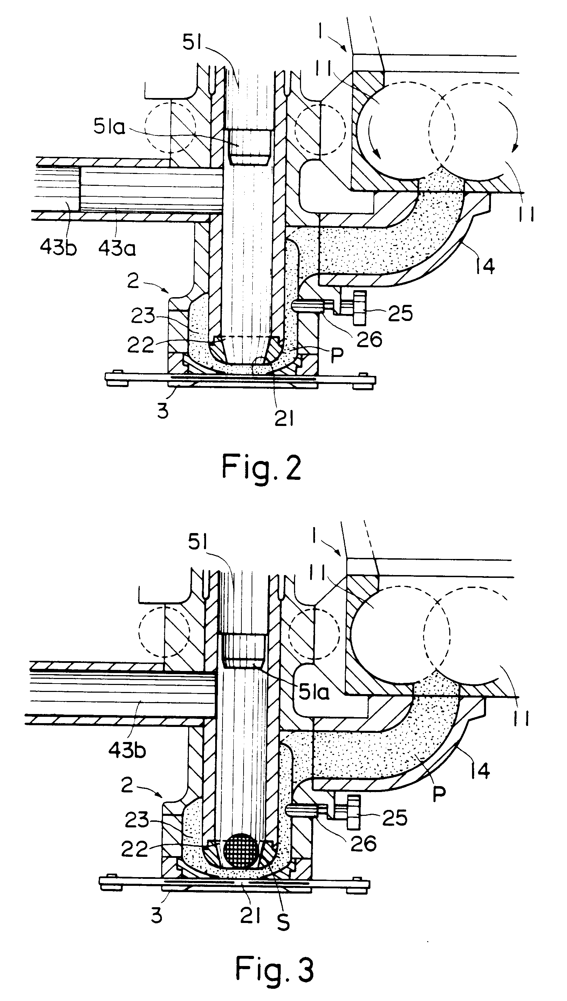

For starting the operation, the gear pump mechanism (11.11) and flighted screw (12) are operated to fill the cavity (23) with the wrapping material P as shown in FIG. 2. When the normal operation starts, the centre material S in hopper (41) falls into the path (43a) via hole (41b) out of the metering device (42) as a result of turning movement of the sectional measuring frame (42a). Then, at the same time, piston (43b) starts to push the centre material S into cylinder (22). When the centre material S enters the cylinder (22), ejection piston (51) starts to descend and gate (3) starts to open gradually, the centre material S is passed through output passage (21) by movement of the extruder (1). When gate (3) opens further wider, piston (51) helps to force the centre material S through the passage (21). After the above procedure, the outside of the centre material S is wrapped and sealed completely with the wrapping material P.

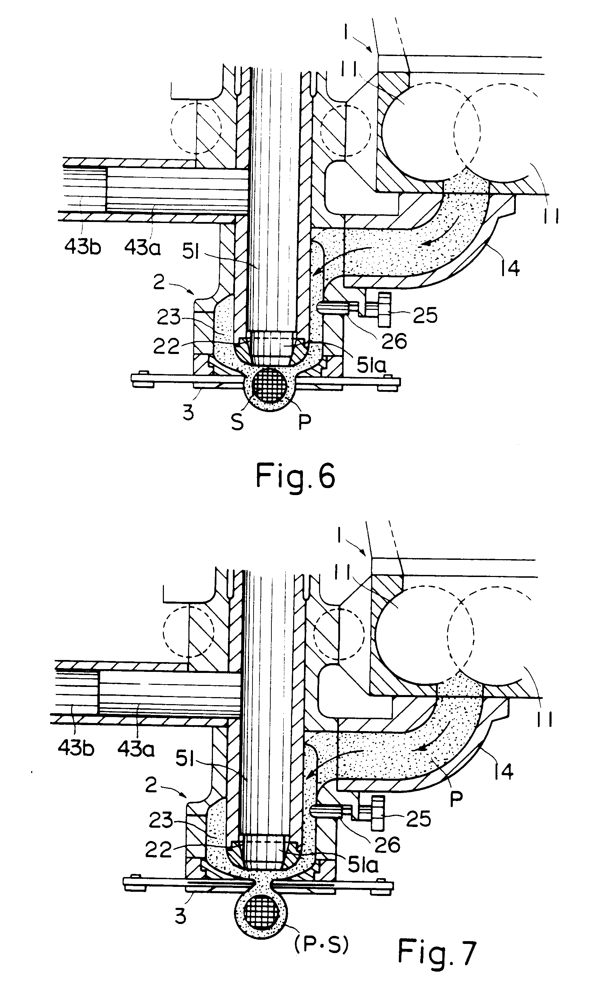

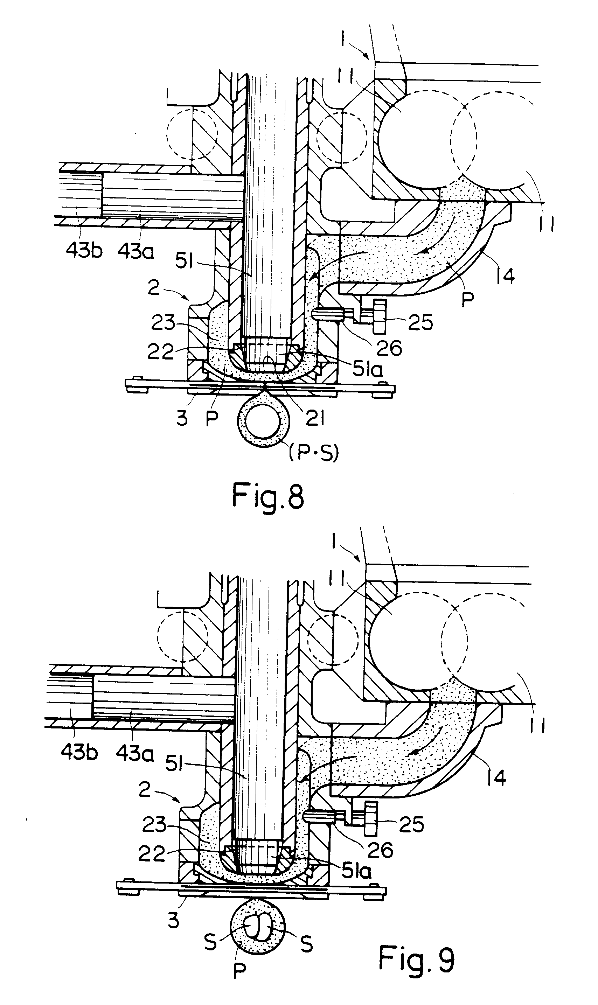

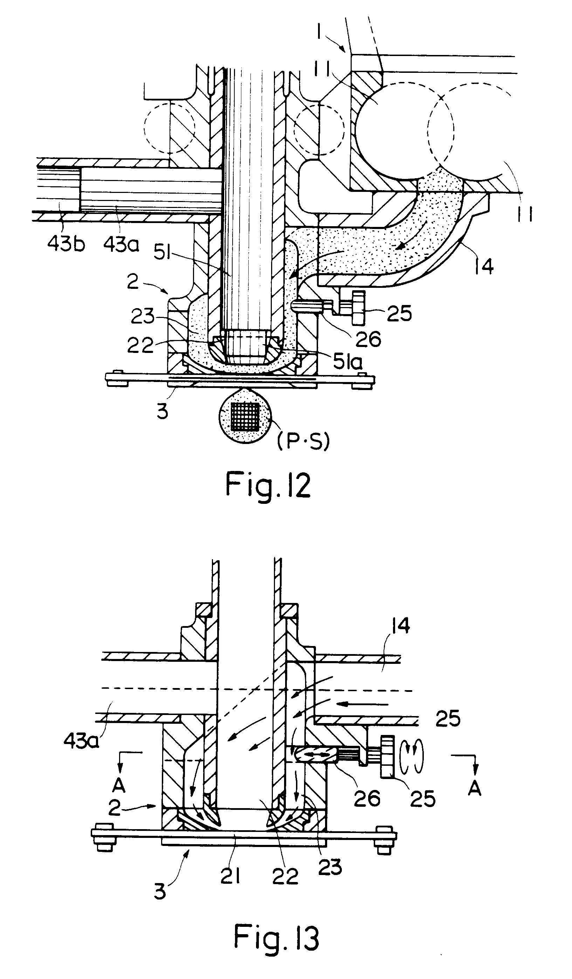

As shown on FIG. 6, the wrapped and sealed material P and S emerges from passage (21), then gate (3) starts to close, with the result that the material shall be formed into a globular shape in the manner illustrated in FIGS 7 and 8. In the case where the above procedure is carried out without any centre material S, a hollow product consisting solely of the wrapping material P is formed, as shown in FIG 11.

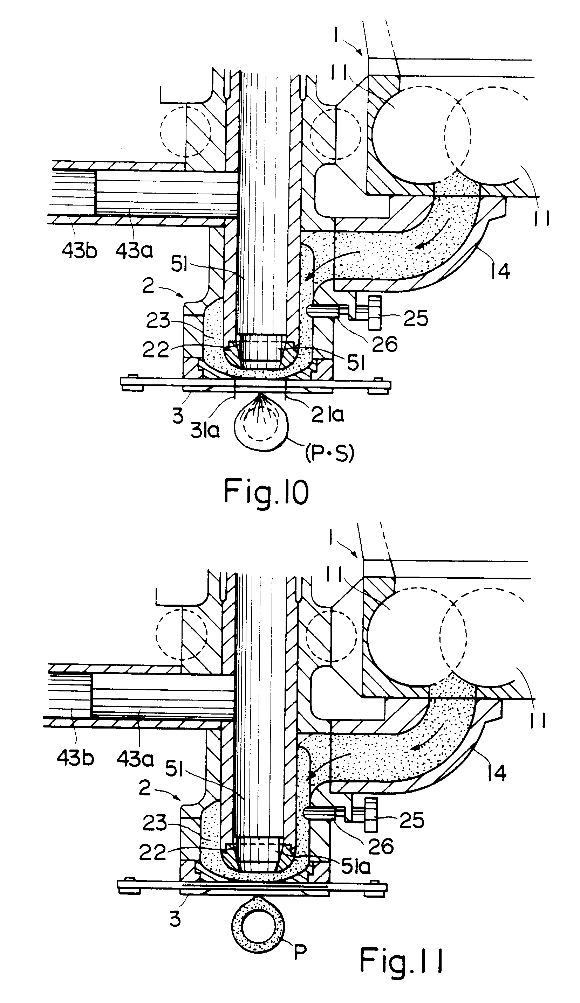

Other procedures are possible. For example, as shown in FIG. 9, 2 pieces of centre material S (eg almonds) can be wrapped and sealed with wrapping material P. Alternatively, and as shown in FIG. 10, when a cylindrical cloth (21a) is provided at the output passage (21), the top of the globular shape is formed like a cone-shaped hat. As shown in FIG. 12, the cube of Yokan (Japanese confectionery-sweet jelly formed of beans) can also be wrapped and sealed in a wrapping material. This invention makes it possible to produce the globular shaped food consisting of centre material S and wrapping material P in smooth, rapid succession and with increased efficiency.

The apparatus described above enables the production of globular food wherein there is better adhesion between the wrapping material and centre material than is the case with the apparatus of US Patent No. 4398881.

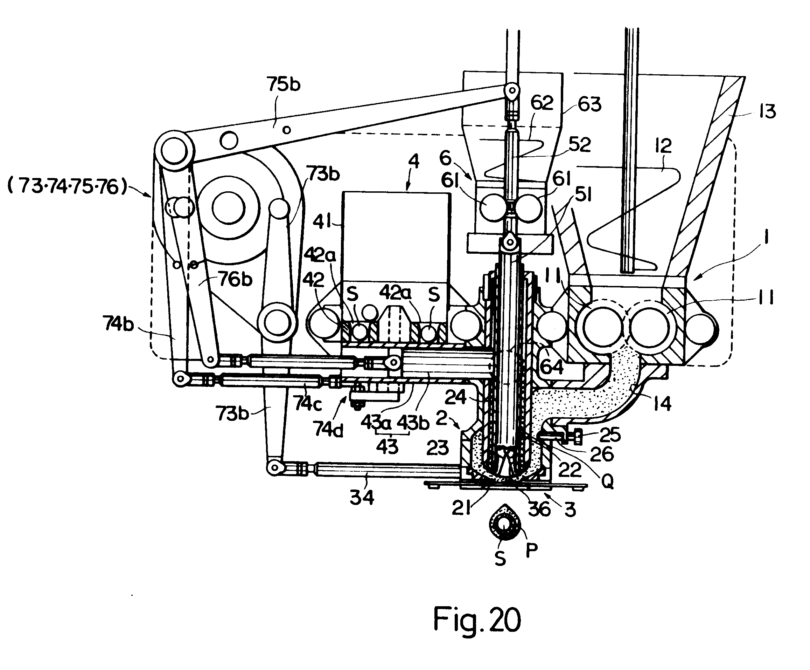

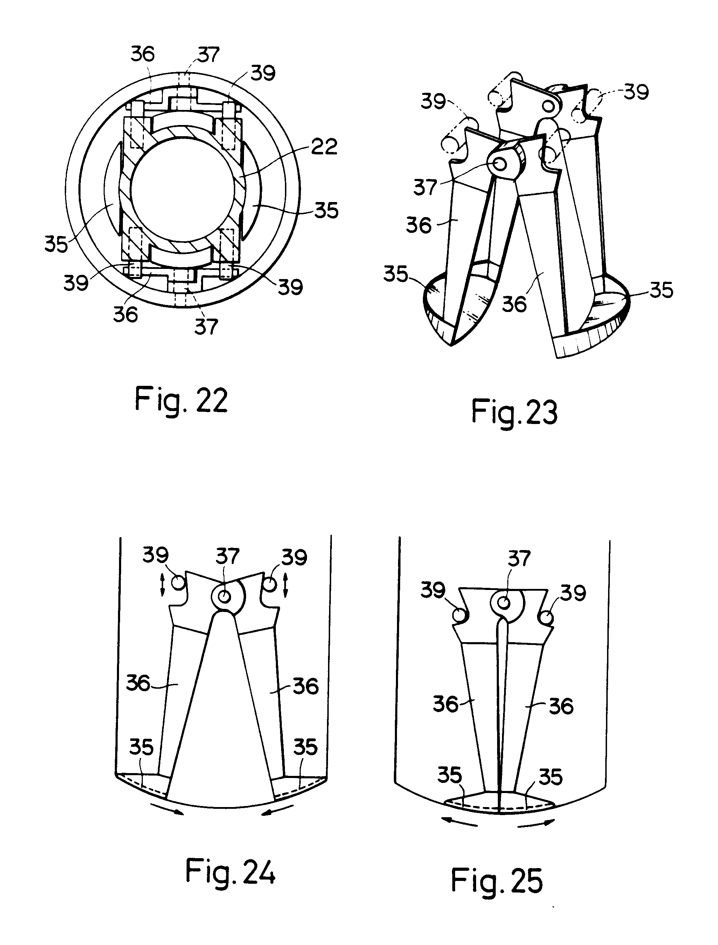

FIG.20 to FIG.33 illustrates a method and apparatus for wrapping and sealing the centre material S with two kinds of wrapping material P and Q, and then forming the resultant food into globular shape. With regard to this second embodiment, the apparatus is similar to the first embodiment described above. However, in this case, a second cavity (24) is provided between cylinder (22) and cavity (23). The second cavity (24) is connected to a second extruder (6) by means of which the second wrapping food material is conveyed into the second cavity (24) wherein the second layer of wrapping material Q is formed between the first layer of wrapping material P and the centre material S. The second extruder (6), like the extruder (1) described previously, has a built-in gear pump mechanism (61), is equipped with a hopper (63) and flighted screw (62), and is operated by an electric induction motor or the like to cause the material Q to be passed into supply path (64). Between the materials P and Q, there lies small bow-shaped shutters (35) separating these two materials. These shutters (35) are provided at the lower ends of respective pairs of levers (36) externally of chamber (22). The upper parts of each pair of levers (36) are pivotally mounted on the outside wall of second cavity (24) by a pivot pin (37).

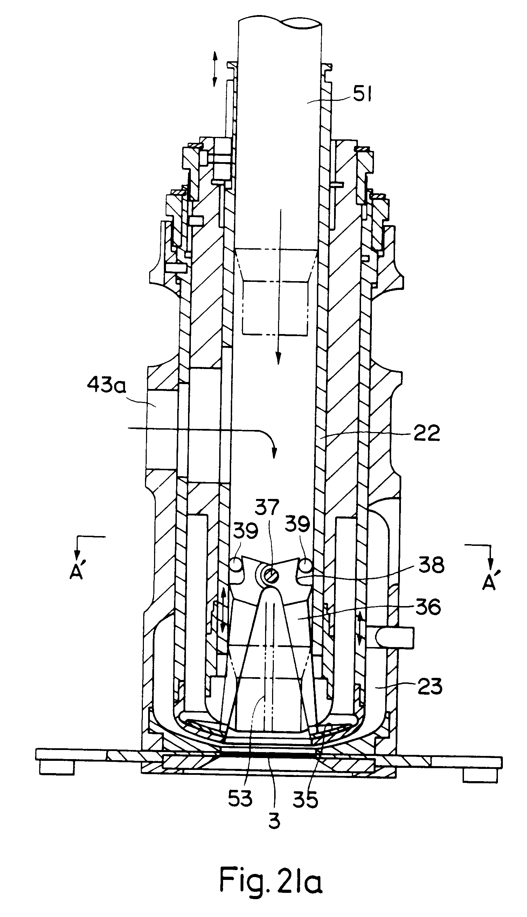

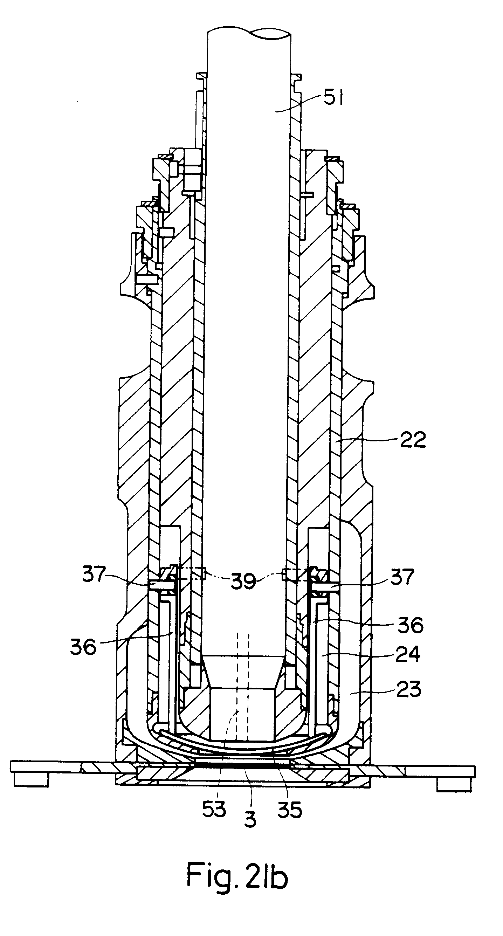

On the upper side edge of each lever (36) there is a moving cam face (38) (see Fig. 21a). Each cam face (38) co-operates with a respective cam pin (39) carried by the cylinder (22). Up and down movement of cylinder (22) effects the opening and closing of shutter (35) through lever (36), causing the flow of the second wrapping material Q to be respectively permitted and prevented.

Piston (51) which moves up and down within a cylinder (22) has an air path (53) at its tip connected with outside air supply origin (not shown on the drawing), and from its tip, inspiration and expiration of air can be effected.

Except as described above, apparatus operates in the same way as the first embodiment.

### Production Procedures.

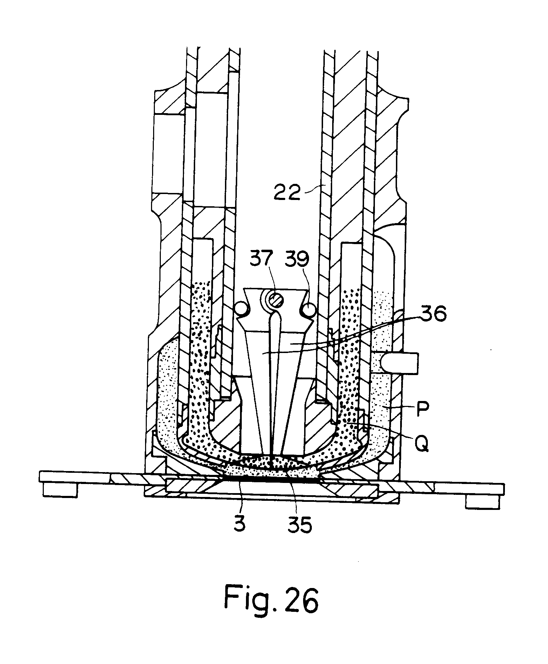

Referring to FIG. 26 - FIG.33, the following explanation applies for the second embodiment:-
FIG. 26 shows the preliminary procedure. Shutter (35) is closed, and first wrapping material P and second wrapping material Q are supplied into the respective spaces separated by the shutter (35) so that there is no intermixing of these materials, in order that the centre material S can be sealed by two discrete wrapping layers. At this stage, the piston (51) is disposed above the path (43a) (See FIG. 21a).

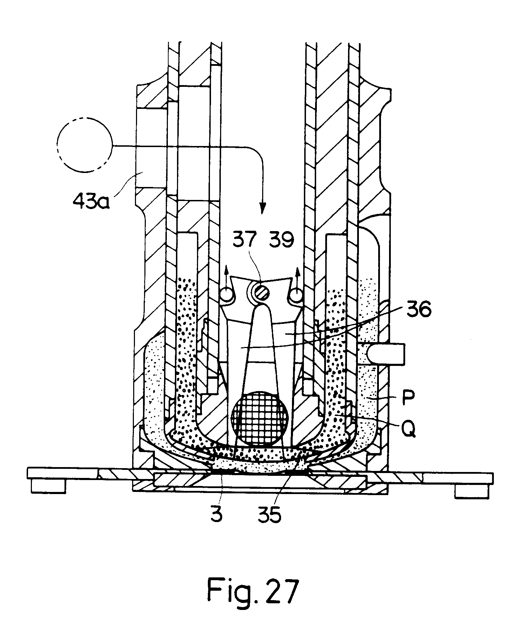

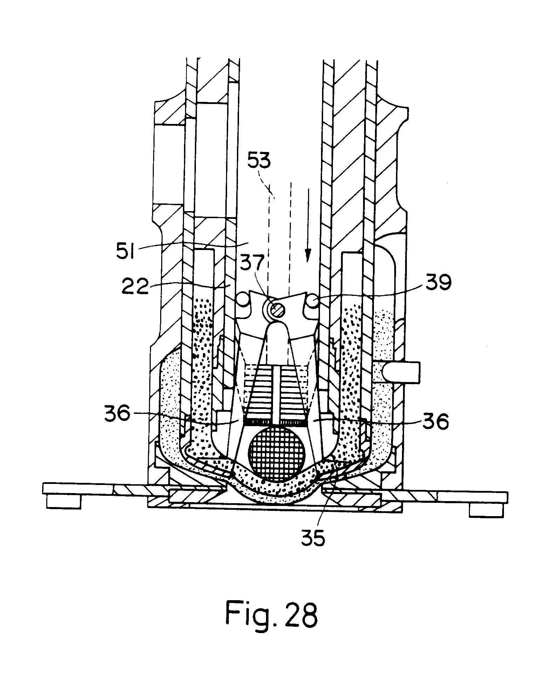

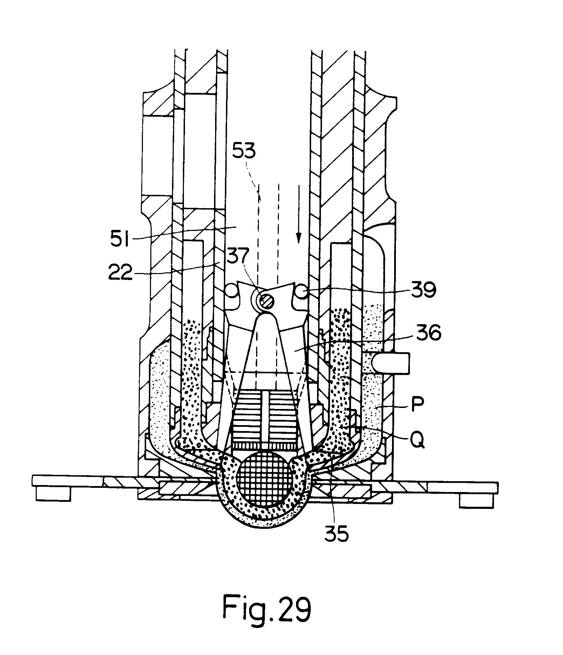

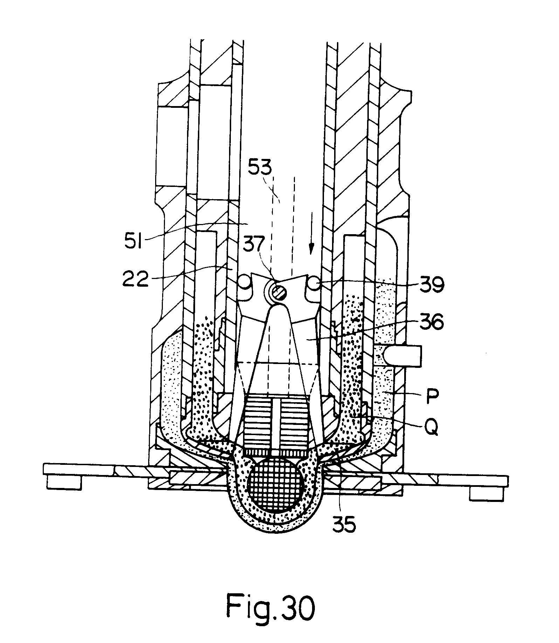

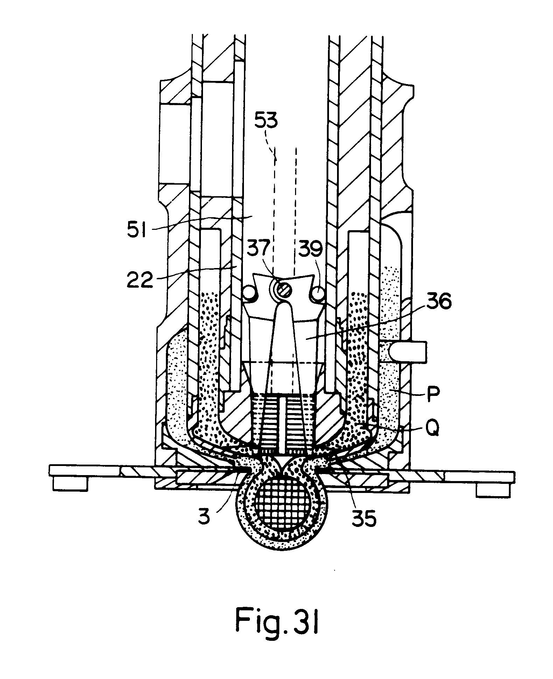

In a similar way to the first embodiment, through the mechanism (4) the centre material S is supplied to and passed into cylinder (22) and then is placed on the upper part of wrapping material Q, when cylinder (22) starts to rise, and shutter (35) and gate (3) start to open. (See FIG. 27). Soon after this, piston (51) starts to descend so as to eject the centre material S together with the first and second wrapping materials P and Q through open shutter (35) and gate (3). (See FIG. 28)
This ejection movement is effected as shown in FIGS 29 and 30 and then cylinder (22) starts to descend. At this stage centre material S wrapped and sealed with both wrapping materials P and Q is ejected from gate (3) completely, and gate (3) and shutter (35) start to close (see FIG. 31). Then, in the early stage of this closing action, air existing between material S and material Q is inspired and drawn through the air path (53) of piston (51), and thus a desirable adhesion occurs between the materials S and Q.

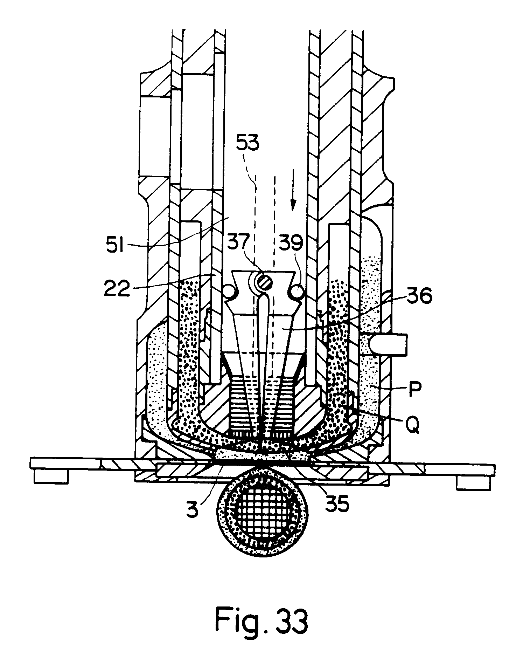

Gate (3) and shutter (35) continue to close, as shown in FIG 33, the material S doubly wrapped and sealed with the two materials P and Q is formed into globular shape. When shutter (35) is completely closed, the two materials P and Q are cut off as two discrete layers without intermixing. The apparatus then returns to the initial condition illustrated in FIG. 26.

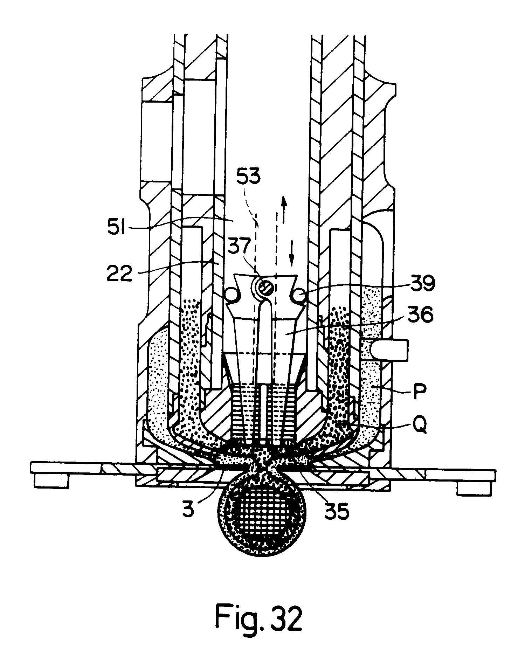

As shown in FIG. 32, just before the shutter (35) has closed completely, piston (51) is lifted slightly to inspire air, whereby any adhering wrapping material is removed from its tip. In accordance with this second embodiment, a food product is obtained wherein the centre food material S is doubly wrapped and sealed with two wrapping food materials P and Q and is in globular shape.

## Claims

1. A method of forming globular food products in which a solid state food material (S) wrapped with a wrapping material (P) which is a food material having a clay-like, dough-like or plastic consistency, said method comprising the steps of repeatedly:-
(a) providing a layer of the wrapping material (P) in the region of the gate (3) having an openable mouth (21);
(b) placing the solid state food material (S) on the layer of wrapping material (P);
(c) ejecting the solid state food material (S) having the wrapping material (P) on its circumference through mouth (21); and
(d) severing the wrapping material (P) so as to form the globular shape by closing of the mouth (21) of the gate (3),
characterised in that each step (b) comprises separating at least one piece of solid food material (S) from a supply (4) of said pieces and then placing said at least one piece on the layer of wrapping material (P).

2. A method as claimed in claim 1, wherein a further layer of wrapping material (Q) is provided as a layer over the gate (3), said at least one piece of said food material (S) is placed on the layers of the wrapping materials (P and Q), and steps (c) and (d) are effected so as to form a food product in which said at least one piece is wrapped in two layers of wrapping material (P and Q).

3. A method as claimed in claim 2, including the step of maintaining the two layers of the wrapping material (P and Q) separate until just before step (c).

4. A method as claimed in any preceding claim, including the step of removing air from between the solid state food material (S) and the wrapping material (P or P and Q) during step (c).

5. A method as claimed in any preceding claim, wherein the wrapping material (P or P and Q) is of a type which can be passed along a passage from a hopper (13 or 13 and 63) to the gate (3).

6. A method as claimed in claim 1, wherein the wrapping material (P) is passed into a chamber (23) above the gate (3) whilst the latter is closed so as to form said layer under a cylinder (22), and said at least one piece of food material (S) is fed through the cylinder (22) onto the layer of the wrapping material (P) and is urged through the mouth (21) of the gate (3) as the latter opens.

7. Apparatus for forming globular food products in which a solid state food material (S) is wrapped with a wrapping material (P) which is a food material having a clay-like, dough-like or plastic consistency, said apparatus comprising:-
(a) a gate (3) having a mouth (21) which can be opened and closed;
(b) means (34, 73a, 73b) connected with the gate (3) so as to open and close the mouth (21);
(c) wrapping material supply means (11, 13, 14) communicating with the gate (3) and arranged to provide a layer of the wrapping material (P) on the gate (3),
(d) solid state food material supply means (4) arranged to supply the solid state food material (S) to a location above the gate (3) where the layer of wrapping material (P) is provided so that, in use, the solid state food material (S) is placed on the layer of wrapping material (P); and
(e) means (5) for urging the solid state food material (S) and wrapping material (P) through the gate (3) as the latter is opened by the means (b), whereby in use the wrapping material (P) is wrapped around the solid state food material (S) and the mouth (21) of the gate (3) is closed so as to form the food product to globular shape, characterized in that said solid state food supply means (4) includes means (42) for separating at least one piece of solid food material (S) from a supply (41) of said pieces and for placing said at least one separated piece on the layer of wrapping material (P).

8. Apparatus as claimed in claim 7, wherein the gate (3) includes a plurality of relatively slidable gate plates (31) having holes (32) therethrough so that relative sliding movement of the gate plates (31) causes the mouth (21) to be opened and closed, and the means (34, 73a and 73b) is arranged to effect such relative sliding movement of the gate plates (31) so that the mouth (21) is caused to open and close by moving the holes (32) in the plates (31) into and out of mutual coincidence respectively.

9. An apparatus as claimed in claim 8, wherein two gate plates (31) are provided.

10. Apparatus as claimed in any one of claims 7 to 9, wherein the supply means (11, 13, 14) includes a hopper (13) and passage means (14) connecting the hopper (13) with the gate (3).

11. Apparatus as claimed in claim 10, wherein the supply means (11, 13, 14) includes a gear pump (11) for urging the wrapping material (P) along said passage means (14).

12. Apparatus as claimed in claim 10, wherein the supply means (11, 13, 14) includes a piston mechanism for urging the wrapping material (P) along said passage means (14).

13. Apparatus as claimed one any one of claims 7 to 12, wherein the supply means (4) includes a hopper (41) for storing a plurality of pieces of the solid food material (S) and metering means (43) for passing said at least one piece from the hopper (41) to a cylinder (22) opening at a location above the gate (3).

14. Apparatus as claimed in any one of claims 7 to 13, wherein the part (51, 51a) comprises a vertically reciprocatable piston (51).

15. Apparatus as claimed in any one of claims 7 to 14, including a further wrapping material supply means (6) arranged to supply further wrapping material (Q) independently of the supply means (11, 13, 14).

16. Apparatus as claimed in claim 15, further including a shutter (35) for maintaining the wrapping material (P) and further wrapping material (Q) separate, and means (36, 38, 39) connected with the shutter (35) and arranged to control opening and closing thereof corresponding to opening and closing of the mouth (21) of the gate (3).

17. Apparatus as claimed in any one of claims 7 to 16, further including means (53) for removing air from said location above the gate (3).

18. Apparatus as claimed in claim 7, wherein the supply means (4) includes a cylinder (22), the supply means (11, 13 ,14) includes a cavity (23) disposed coaxially around the cylinder (22), and wherein the mouth (21) through which the flow of material is controlled by the gate (3) co-axially faces the cylinder (22) and cavity (23), the arrangement being such that an even layer of the wrapping material (P) is provided between the cylinder (22) and the gate (3) when the latter is closed, and said at least one piece of solid food material (S) is passed along the cylinder (22) to rest on said layer.

19. Apparatus as claimed in claim 18, wherein a second cavity (24) is provided between cylinder (22) and the cavity (23), and supply means (6) is provided for supplying a second wrapping material (Q) to said second cavity (24) so that, in use, said at least one piece of solid food material (S) is wrapped with a layer of the second wrapping material (Q) disposed between said at least one piece and the first-mentioned wrapping material (P).

## Patentansprüche

1. Verfahren zur Gestaltung eines kugelförmigen Lebensmittelproduktes, bei dem ein sich im festen Zustand befindliches Lebensmittel (S) in ein Packmaterial (P), bestehend aus einem Lebensmittelmaterial, das ein tonartige, teigartige oder plastische Konsistenz aufweist, eingewickelt wird, gekennzeichnet durch folgende wiederholt ausgeführte Verfahrensschritte:
(a) Bereitstellung einer Schicht des Verpackungsmaterials (P) im Bereich des Auswurfs (3), der ein bewegliches Mundloch (21) aufweist,
(b) Anordnung des sich im festen Zustand befindlichen Lebensmittels (S) auf der Verpackungsmaterialschicht (P),
(c) Ausstoßen des sich im festen Zustand befindlichen Lebensmittels (S) durch den Auswurf, wobei Lebensmittel das Verpackungsmaterial (P) an seinem Umfang trägt,
(d) Abtrennen des Verpackungsmaterials (P) durch Schließen des Mundlochs (21) des Auswurfs (3), um 90 die kugelförmige Gestalt zu bilden.

2. Verfahren nach Anspruch 1, dadurch gekennzeichnet, daß eine weitere Schicht (Q) des Verpackungsmaterials als eine Schicht über dem Auswurf (3) vorgesehen ist, daß das zumindest eine Stück Lebensmittel auf die Verpackungsmaterialschichten (P, Q) gelegt wird, und daß die Schritte (c) und (d) ausgeführt werden, um ein Lebensmittelprodukt zu formen, in dem das zumindest eine Stück in zwei Schichten des Verpackungsmaterials (P, Q) eingewickelt ist.

3. Verfahren nach Anspruch 2, dadurch gekennzeichnet, daß bis unmittelbar vor dem Schritt (c) die beiden Schichten des Verpackungsmaterials (P, Q) getrennt gehalten werden.

4. Verfahren nach einem der vorhergehenden Ansprüche, dadurch gekennzeichnet, daß während des Schrittes (c) die Luft zwischen dem sich im festen Zustand befindlichen Lebensmittel (S) und dem Verpackungsmaterial (P, Q) entfernt wird.

5. Verfahren nach einem der vorhergehenden Ansprüche, dadurch gekennzeichnet, daß das Verpackungsmaterial (P oder P und Q) aus einem Material besteht, das durch einen Durchlaß von einem Trichter (13 oder 13 und 63) zu dem Auswurf (3) geführt werden kann.

6. Verfahren nach Anspruch 1, dadurch gekennzeichnet, daß das Verpackungsmaterial (P) in eine Kammer (23) oberhalb des Auswurfs (3) geführt wird, während dieser geschlossen wird, um die Schicht unter einem Zylinder (22) zu formen, und daß das zumindest ein Stück Lebensmittel durch den Zylinder (22) auf die Verpackungsmaterialschicht (P) geführt wird und durch das Mundloch (21) des Auswurfs (3) gedrückt wird, wenn sich der Auswurf öffnet.

7. Vorrichtung zur Gestaltung eines kugelförmigen Lebensmittelproduktes, mit der ein sich im festen Zustand befindliches Lebensmittel (S) in ein Packmaterial (P), bestehend aus einem Lebensmittelmaterial, das eine tonartige, teigartige oder plastische Konsistenz aufweist, eingewickelt wird, aufweisend:
(a) einen Auswurf (3), der ein Mundloch (21) aufweist, das geöffnet und geschlossen werden kann,
(b) Mittel (34, 73a, 73b) zum Öffnen und Schließen des Mundlochs (21), die mit dem Auswurf (3) verbunden sind,
(c) Mittel (11, 13, 14) zur Bereitstellung von Verpackungsmaterial, die mit dem Auswurf zusammenhängen und so angeordnet sind, daß eine Verpackungsmaterialschicht (P) auf dem Auswurf (3) bereitgestellt werden kann,
(d) Mittel (4) zur Bereitstellung von sich im festen Zustand befindlichen Lebensmitteln, die so angeordnet sind, daß das sich im festen Zustand befindliche Lebensmittel (S) an eine Stelle über dem Auswurf (3) gebracht werden kann, an der die Verpackungsmaterialschicht (P) so zur Verfügung steht, daß im Gebrauch das sich im festen Zustand befindliche Lebensmittel (S) auf die Verpackungsmaterialschicht (P) gelegt wird, und
(e) Mittel (5) zum Durchdrücken des sich im festen Zustand befindlichen Lebensmittels (S) und des Verpackungsmaterials (P) durch den Auswurf (3), wenn dieser durch die Mittel (b) geöffnet wird, wobei im Gebrauch das Verpackungsmaterial (P) um das sich im festen Zustand befindliche Lebensmittel (S) herumgewickelt wird, und das Mundloch (21) des Auswurfs (3) geschlossen wird, um dem Lebensmittel seine kugelförmige Gestalt zu geben, dadurch gekennzeichnet, daß die Mittel (4) zur Bereitstellung von im festen Zustand befindlichen Lebensmitteln Mittel (42) zum Abtrennen zumindest eines Stückes von festen Lebensmitteln (S) von einer Zufuhr (41) der genannten Stücke umfassen, sowie zum Aufbringen zumindest eines abgetrennten Stückes auf die Schicht aus Verpackungsmaterial (P).

8. Vorrichtung nach Anspruch 7, dadurch gekennzeichnet, daß der Auswurf (3) eine Vielzahl von gegeneinander verschiebbaren Auswurfplatten (31) enthält, die mit Löchern (32) versehen sind, so daß ein Verschieben der Auswurfplatten (31) gegeneinander ein Öffnen beziehungsweise Schließen des Mundlochs (21) verursacht, und daß die Mittel (b) (34, 73a, 73b) so angeordnet sind, daß ein solches Gegeneinanderverschieben der Auswurfplatten (31) bewirkt, daß Gas Mundloch (21) geöffnet und geschlossen wird, indem die Löcher in den Platten zum Fluchten gebracht werden oder aus einer fluchtenden Lage heraus bewegt werden.

9. Vorrichtung nach Anspruch 8, dadurch gekennzeichnet, daß zwei Auswurfplatten (31) vorgesehen sind.

10. Vorrichtung nach einem der Ansprüche 7 bis 9, dadurch gekennzeichnet, daß die Bereitstellungsmittel (11, 13, 14) einen Trichter (13) und Führungsmittel (14), die den Trichter (13) mit dem Auswurf (3) verbinden, enthalten.

11. Vorrichtung nach Anspruch 10, dadurch gekennzeichnet, daß die Bereitstellungsmittel (11, 13, 14) eine Zahnradpumpe (11) enthalten, um das Verpackungsmaterial (P) entlang der Führungsmittel (14) zu befördern.

12. Vorrichtung nach Anspruch 10, dadurch gekennzeichnet, daß die Bereitstellungsmittel (11, 13, 14) einen Kolbenmechanismus enthalten, um das Verpackungsmaterial entlang der Führungsmittel (14) zu befördern.

13. Vorrichtung nach einem der Ansprüche 7 bis 12, dadurch gekennzeichnet, daß die Bereitstellungsmittel (4) einen Trichter (41) zum Speichern einer Vielzahl von Stücken des sich im festen Zustand befindlichen Lebensmittels (S) sowie Dosiermittel (43) für die Überleitung des zumindest einen Stücks von dem Trichter (41) zu einer Zylinderöffnung (22) an der Stelle über dem Auswurf (3) enthalten.

14. Vorrichtung nach einem der Ansprüche 7 bis 13, dadurch gekennzeichnet, daß das Teil (51, 51a) einen sich vertikal hin- und herbewegenden Kolben (51) enthält.

15. Vorrichtung nach einem der Ansprüche 7 bis 14, dadurch gekennzeichnet, daß sie eine weitere Einrichtung zum Bereitstellen von Verpackungsmaterial (6) aufweist, um weiteres Verpackungsmaterial unabhängig von den Bereitstellungsmitteln (11, 13, 14) zur Verfügung zu stellen.

16. Vorrichtung nach Anspruch 15, dadurch gekennzeichnet, daß sie weiterhin eine Verschlußklappe (35) zum Getrennthalten des Verpackungsmaterials (P) und des zusätzlichen Verpackungsmaterials (Q) enthält, sowie Mittel (36, 38, 39), die mit der Verschlußklappe (35) verbunden und so angeordnet sind, daß sie das Öffnen und Schließen der Verschlußklappe entsprechend dem Öffnen und Schließen des Mundlochs (21) des Auswurfs (3) kontrollieren.

17. Vorrichtung nach einem der Ansprüche 7 bis 16, dadurch gekennzeichnet, daß sie weiterhin Mittel (53) zur Entfernung dar Luft von der Stelle über dem Auswurf (3) enthält.

18. Vorrichtung nach Anspruch 7, dadurch gekennzeichnet, daß die Bereitstellungsmittel (4) einen Zylinder (22) umfassen; daß die Bereitstellungsmittel (11, 13, 14) einen koaxial um den Zylinder (22) angeordneten Hohlraum (23) umfassen, wobei das Mundloch (21), durch das der Materialfluß vom Auswurf (3) kontrolliert wird, dem Zylinder (22) und dem Hohlraum (23) koaxial gegenüberliegt, und daß die Anordnung so gewählt ist, daß eine gleichmäßige Schicht des Verpackungsmaterials (P) zwischen dem Zylinder (22) und dem Auswurf (3) bereitgestellt wird, wenn letzterer geschlossen wird, wobei das zumindest eine Stück des sich im festen Zustand befindlichen Lebensmittels entlang des Zylinders (22) geführt wird, um auf dieser Schicht zu liegen zu kommen.

19. Vorrichtung nach Anspruch 18, dadurch gekennzeichnet, daß ein zweiter Hohlraum (24) zwischen dem Zylinder (22) und dem ersten Hohlraum (23) vorgesehen ist, und daß Bereitstellungsmittel (6) zur Bereitstellung eines zweiten Verpackungsmaterials (Q) für den zweiten Hohlraum (24) vorgesehen sind, so daß das zumindest eine Stück des sich im festen Zustand befindlichen Lebensmittels (S) im Gebrauch mit einer Schicht des zweiten Verpackungsmaterials (Q) umwickelt wird, die zwischen dem zumindest einem Stück und dem erstgenannten Verpackungsmaterial (P) angeordnet ist.

## Revendications

1. Procédé pour former des produits alimentaires sphériques, dans lequel on emballe une matière alimentaire (S) à l'état solide à l'aide d'une matière d'emballage (P), à savoir une matière alimentaire ayant une consistance analogue à celle de l'argile, analogue à celle d'une pâte ou encore une consistance plastique, ledit procédé comprenant les étapes répétitives consistant à :
(a) procurer une couche de la matière d'emballage (P) dans la zone de la porte (3) munie d'un orifice ouvrant (21);
(b) placer la matière alimentaire (S) à l'état solide sur la couche de la matière d'emballage (P);
(c) éjecter, à travers l'orifice (21), la matière alimentaire (S) à l'état solide qui comporte la matière d'emballage (P) sur sa circonférence; et
(d) détacher la matière d'emballage (P) de façon à obtenir la forme sphérique en fermant l'orifice (21) de la porte (3),
caractérisé en ce que chaque étape (b) comprend la séparation d'au moins un morceau de matière alimentaire solide (S) d'un approvisionnement (4) desdits morceaux et ensuite, à placer le ou lesdits morceaux sur la couche de matière d'emballage (P).

2. Procédé selon la revendication 1, dans lequel on procure une couche supplémentaire de matière d'emballage (Q) comme couche par-dessus la porte (3), on place le ou lesdits morceaux de ladite matière alimentaire (S) sur les couches des matières d'emballage (P et Q) et on procède aux étapes (c) et (d) de façon à former un produit alimentaire dans lequel le ou lesdits morceaux sont emballés dans deux couches de matière d'emballage (P et Q).

3. Procédé selon la revendication 2, englobant l'étape consistant à maintenir séparées les deux couches de la matière d'emballage (P et Q) jusque juste avant l'étape (c).

4. Procédé selon l'une quelconque des revendications précédentes, englobant l'étape consistant à éliminer l'air qui se trouve entre la matière alimentaire (S) à l'état solide et la matière d'emballage (P ou P et Q) au cours de l'étape (c).

5. Procédé selon l'une quelconque des revendications précédentes, dans lequel la matière d'emballage (P ou P et Q) est du type qui peut passer le long d'un passage en provenance d'une trémie (13 ou 13 et 63) en direction de la porte (3).

6. Procédé selon la revendication 1, dans lequel on fait passer la matière d'emballage (P) dans une chambre (23) au-dessus de la porte (3), tandis que cette dernière est fermée, de façon à former ladite couche en dessous d'un cylindre (22), et le ou lesdits morceaux de matière alimentaire (S) sont approvisionnés à travers le cylindre (22) sur la couche de la matière d'emballage (P) et sont pressés à travers l'orifice (21) de la porte (3) lorsque cette dernière s'ouvre.

7. Appareil pour former des produits alimentaires sphériques, dans lequel on emballe une matière alimentaire (S) à l'état solide à l'aide d'une matière d'emballage (P), à savoir une matière alimentaire ayant une consistance analogue à celle de l'argile, analogue à celle d'une pâte ou encore une consistance plastique, ledit appareil comprenant :
(a) une porte (3) munie d'un orifice (21) qui peut être ouvert et fermé;
(b) un moyen (34, 73a, 73b) relié à la porte (3) de façon à ouvrir et à fermer l'orifice (21);
(c) un moyen (11, 13, 14) d'approvisionnement de matière d'emballage communiquant avec la porte (3) et arrangé pour procurer une couche de matière d'emballage (P) sur la porte (3);
(d) un moyen (4) d'approvisionnement de matière alimentaire à l'état solide arrangé pour acheminer la matière alimentaire (S) à l'état solide à un endroit situé au-dessus de la porte (3), où l'on procure la couche de matière d'emballage (P), de telle sorte que, lors de la mise en service, la matière alimentaire (S) à l'état solide vienne se placer sur la couche de la matière d'emballage (P); et
(e) un moyen (5) pour presser la matière alimentaire (S) à l'état solide et la matière d'emballage (P) à travers la porte (3) lorsque cette dernière est ouverte à l'intervention du moyen (b), dans lequel, lors de la mise en service, la matière d'emballage (P) enveloppe la matière alimentaire (S) à l'état solide, et l'orifice (21) de la porte (3) est fermé de façon à procurer la forme sphérique au produit alimentaire, caractérisé en ce que ledit moyen (4) d'approvisionnement de la matière alimentaire à l'état solide englobe un moyen (42) pour séparer au moins un morceau de matière alimentaire solide (S) d'un approvisionnement (41) desdits morceaux et pour placer le ou lesdits morceaux séparés sur la couche de matière d'emballage (P).

8. Appareil selon la revendication 7, dans lequel la porte (3) englobe plusieurs plaques de porte (31) à coulissement relatif à travers lesquelles sont pratiqués des trous (32) de telle sorte que le mouvement de coulissement relatif des plaques de porte (31) provoque l'ouverture et la fermeture de l'orifice (21), et dans lequel le moyen (34, 73a et 73b) est arrangé pour mettre en oeuvre un tel mouvement de coulissement relatif des plaques de porte (31) de façon à ouvrir et à fermer l'orifice (21) en déplaçant les trous (32) pratiqués dans les plaques (31) pour les faire coïncider mutuellement ou non, respectivement.

9. Appareil selon la revendication 8, dans lequel on procure deux plaques de porte (31).

10. Appareil selon l'une quelconque des revendications 7 à 9, dans lequel le moyen d'approvisionnement (11, 13, 14) englobe une trémie (13) et un moyen de passage (14) reliant la trémie (13) à la porte (3).

11. Appareil selon la revendication 10, dans lequel le moyen d'approvisionnement (11, 13, 14) englobe une pompe à engrenages (11) pour presser la matière d'emballage (P) le long dudit moyen de passage (14).

12. Appareil selon la revendication 10, dans lequel le moyen d'approvisionnement (11, 13, 14) englobe un mécanisme à piston pour presser la matière d'emballage (P) le long dudit moyen de passage (14).

13. Appareil selon l'une quelconque des revendications 7 à 12, dans lequel le moyen d'approvisionnement (4) englobe une trémie (41) pour entreposer plusieurs morceaux de la matière alimentaire solide (S), ainsi qu'un moyen de dosage (43) pour faire passer le ou lesdits morceaux depuis la trémie (41) jusqu'à un cylindre (22) s'ouvrant à un endroit situé au-dessus de la porte (3).

14. Appareil selon l'une quelconque des revendications 7 à 13, dans lequel la partie (51, 51a) comprend un piston alternatif (51) en direction verticale.

15. Appareil selon l'une quelconque des revendications 7 à 14, englobant un moyen supplémentaire (6) d'approvisionnement de matière d'emballage arrangé pour approvisionner une matière supplémentaire d'emballage (Q) indépendamment du moyen d'approvisionnement (11, 13, 14).

16. Appareil selon la revendication 15, englobant, en outre, un obturateur (35) pour maintenir séparées la matière d'emballage (P) et la matière d'emballage supplémentaire (Q), ainsi qu'un moyen (36, 38, 39) relié à l'obturateur (35) et arrangé pour commander l'ouverture et la fermeture de ce dernier de manière correspondante à l'ouverture et à la fermeture de l'orifice (21) de la porte (3).

17. Appareil selon l'une quelconque des revendications 7 à 16, englobant, en outre, un moyen (53) pour éliminer l'air dudit endroit situé au-dessus de la porte (3).

18. Appareil selon la revendication 7, dans lequel le moyen d'approvisionnement (4) englobe un cylindre (22) et le moyen d'approvisionnement (11, 13, 14) englobe une cavité (23) disposée coaxialement autour du cylindre (22), et dans lequel l'orifice (21) à travers lequel l'écoulement de matière est commandé par la porte (3) fait face en direction coaxiale au cylindre (22) et à la cavité (23), l'arrangement étant tel que l'on procure une couche uniforme de la matière d'emballage (P) entre le cylindre (22) et la porte (3) lorsque cette dernière est fermée, et le ou lesdits morceaux de matière alimentaire solide (S) passent le long du cylindre (22) pour venir se disposer sur ladite couche.

19. Appareil selon la revendication 18, dans lequel on procure une seconde cavité (24) entre le cylindre (22) et la cavité (23), et on procure un moyen d'approvisionnement (6) pour acheminer une seconde matière d'emballage (Q) dans ladite seconde cavité (24) de telle sorte que, lors de la mise en service, le ou lesdits morceaux de matière alimentaire solide (S) sont enveloppés à l'aide d'une couche de la seconde matière d'emballage (Q) disposée entre le ou lesdits morceaux et la matière d'emballage (P) mentionnée en premier lieu.
